# EUROPEAN PATENT APPLICATION

(11) **EP 2 767 327 A1**
(43) Date of publication of application: **20.08.2014**
(21) Application number: 12831011.7
(22) Date of filing: 10.09.2012
(51) Int. Cl.: B01D 53/62, B01D 53/14, C01B 31/20

(54) **CO2 RECOVERY DEVICE AND CO2 RECOVERY METHOD**

(30) Priority: 13.09.2011 JP 2011199882
(71) Applicant: Mitsubishi Heavy Industries, Ltd., Tokyo 108-8215 (JP); The Kansai Electric Power Co., Inc., Osaka-shi, Osaka 530-8270 (JP)
(72) Inventor: TSUJIUCHI, Tatsuya, Tokyo 108-8215 (JP); TANAKA, Hiroshi, Tokyo 108-8215 (JP); NAGAYASU, Hiromitsu, Tokyo 108-8215 (JP); HIRATA, Takuya, Tokyo 108-8215 (JP); OISHI, Tsuyoshi, Tokyo 108-8215 (JP); KAMIJO, Takashi, Tokyo 108-8215 (JP); TATSUMI, Masahiko, Amagasaki Hyogo 661-0974 (JP); YAGI, Yasuyuki, Amagasaki Hyogo 661-0974 (JP); KAIBARA, Kazuhiko, Amagasaki Hyogo 661-0974 (JP)
(74) Representative: Bongiovanni, Simone
(86) International application number: PCT/JP2012/073102
(87) International publication number: WO 2013/039041

(57) **Abstract**

A CO₂ recovery apparatus provided with a CO₂ absorption tower 13 for making a purified exhaust gas 11B by bringing a CO₂-containing exhaust gas 11A and a CO₂ absorbing liquid 12 into contact with each other so as to remove CO₂ and an absorbing liquid regeneration tower 14 for regenerating the CO₂ absorbing liquid 12 by separating CO₂ from the CO₂ absorbing liquid, in which a lean solution 12B removed of CO₂ in the absorbing liquid regeneration tower 14 is reused in the CO₂ absorption tower 13, a cooling tower 70 for cooling the CO₂-containing exhaust gas containing CO₂ is provided on the upstream flow side of the CO₂ absorption tower 13 so as to set a temperature (T₂) of the purified exhaust gas 11B exhausted from the CO₂ absorption tower lower than a temperature (T₁) of the CO₂-containing exhaust gas 11A containing CO₂ cooled in the cooling tower (T₁ > T₂), and a condensed water 44 made by condensing water vapor discharged from the absorbing liquid regeneration tower 14 is evaporated in an evaporation portion 90.

## Description

### Field

The present invention relates to a CO₂ recovery apparatus and a CO₂ recovery method for reducing concentration of amine compounds remaining in and being emitted from a decarbonated exhaust gas from which CO₂ has been removed by being contacted with an absorbing liquid. Background

As a cause of global warming, the greenhouse effect due to CO₂ is pointed out, and countermeasures against the same must be quickly taken internationally in saving the global environment. Various fields of human activity burning fossil fuel as generation sources of CO₂, the demand for suppression of CO₂ emissions is further increasing. Accordingly, for power generation facilities such as thermal power plants and the like using a large amount of fossil fuel, a method that exhaust gas from a boiler is contacted with an amine-based absorbing liquid such as an aqueous solution of amine compound so as to remove CO₂ in the exhaust gas and recover the same is energetically studied.

When recovering CO₂ from exhaust gas using such an absorbing liquid, a decarbonated exhaust gas from which the CO₂ is recovered is accompanied by the absorbing liquid and anime compounds derived from the absorbing liquid. Additionally, in order to prevent air pollution by the amine compounds, it is necessary to reduce the discharge amount of the amine compounds which are emitted together with the decarbonated exhaust gas.

Conventionally, Patent Literature 1 discloses that plural stages of water washing portions which recover an amine compound accompanied by a decarbonated exhaust gas by bringing a washing liquid into contact with the decarbonated exhaust gas from which CO₂ is absorbed and removed by a gas-liquid contact with an absorbing liquid are provided, and a recovery process of an amine compound accompanying a decarbonated exhaust gas is sequentially performed in the plural stages of the water washing portions. For the washing liquid of Patent Literature 1, condensed water obtained by condensing and separating moisture contained in CO₂ in a process where CO₂ is diffused from an amine-based absorbing liquid which has absorbed the CO₂ so as to regenerate the amine-based absorbing liquid is used.

Further, conventionally, Patent Literature 2 discloses that a cooling portion where a decarbonated exhaust gas from which CO₂ is absorbed and removed by a gas-liquid contact with an absorbing liquid is cooled, and a contact portion where condensed water which has been condensed in the cooling portion and the decarbonated exhaust gas are in counterflow contact with each other. Furthermore, Patent Literature 2 discloses that a water washing portion which recovers an amine compound accompanying a decarbonated exhaust gas by bringing a washing liquid into contact with the decarbonated exhaust gas from which CO₂ is absorbed and removed by a gas-liquid contact with an absorbing liquid are provided, and for the washing liquid, condensed water which has been condensed in a cooling tower where exhaust gas before CO₂ is recovered therefrom is used.

### Citation List

### Patent Literatures

Patent Literature 1: Japanese Patent Application Laid-open No. 2002-126439
Patent Literature 2: Japanese Patent Application Laid-open No. 8-80421

### Summary

### Technical Problem

However, in recent years, it is desired to further reduce concentration of components of an absorbing liquid remaining in and being emitted from a decarbonated exhaust gas in terms of environmental preservation. Especially, when installing CO₂ recovery apparatuses for exhaust gas from thermal power plants and the like which have a large amount of flow of processing gas anticipated in the future, a large amount of exhaust gas is emitted, and thereby the emission amount of components of an absorbing liquid remaining in and being emitted from a decarbonated exhaust gas tends to increase. Therefore, it is necessary to further reduce the concentration of emitted components of an absorbing liquid.

The present invention is to solve the above-mentioned problem and to provide a CO₂ recovery apparatus and a CO₂ recovery method capable of further reducing concentration of amine compounds remaining in and being emitted from a decarbonated exhaust gas.

### Solution to Problem

According to a first aspect of the present invention in order to solve the above-mentioned problem, there is provided a CO₂ recovery apparatus including: a CO₂ absorption tower for bringing a CO₂-containing exhaust gas containing CO₂ and a CO₂ absorbing liquid into contact with each other so as to remove CO₂ and make a purified exhaust gas; and an absorbing liquid regeneration tower for separating CO₂ from the CO₂ absorbing liquid which has absorbed CO₂ so as to regenerate the CO₂ absorbing liquid, wherein a lean solution from which CO₂ has been removed in the absorbing liquid regeneration tower is reused in the CO₂ absorption tower, wherein a cooling tower for cooling the CO₂-containing exhaust gas containing CO₂ is provided on a side of an upstream flow of the CO₂ absorption tower and a temperature (T₂) of the purified exhaust gas exhausted from the CO₂ absorption tower is set to be lower than a temperature (T₁) of the CO₂-containing exhaust gas containing CO₂ cooled in the cooling tower (T₁ > T₂), and wherein an evaporation portion is configured to evaporate a condensed water made by condensing water vapor discharged from the absorbing liquid regeneration tower.

According to a second aspect of the present invention, there is provided the CO₂ recovery apparatus according to the first aspect, wherein the CO₂ absorption tower includes: a CO₂ absorption portion for absorbing CO₂ in the CO₂-containing exhaust gas by the CO₂ absorbing liquid, a water washing portion for cooling a CO₂₋removed exhaust gas by the washing liquid and for recovering the CO₂ absorbing liquid which accompanies the same, the water washing portion being provided on a side of a downstream flow of a gas flow of the CO₂ absorption portion; a washing liquid circulation line for supplying the washing liquid containing the CO₂ absorbing liquid recovered in the water washing portion from a side of a top of the water washing portion so as to circulate and wash the washing liquid; an extraction line for extracting a part of the washing liquid containing the CO₂ absorbing liquid as an extracted liquid from the washing liquid circulation line; and a concentration portion for concentrating the CO₂ absorbing liquid while separating a gas component from the extracted liquid.

According to a third aspect of the present invention, there is provided the CO₂ recovery apparatus according to the second aspect, wherein the concentration portion includes: a concentration tower for heating an extracted water; a concentrated liquid return line for returning a concentrated liquid separated from the concentration tower to the CO₂ absorption tower; and an acid washing tower for treating a volatile component contained in a gas component separated in the concentration tower with an acid and recovering the volatile component.

According to a forth aspect of the present invention, there is provided a CO₂ recovery method for using a CO₂ absorption tower for removing CO₂ by bringing a CO₂-containing exhaust gas containing CO₂ and a CO₂ absorbing liquid into contact with each other so as to remove CO₂ and an absorbing liquid regeneration tower for regenerating the CO₂ absorbing liquid by separating CO₂ from the CO₂ absorbing liquid absorbing CO₂ so as to reuse a lean solution from which CO₂ has been removed in the absorbing liquid regeneration tower in the CO₂ absorption tower, wherein a cooling tower for cooling the CO₂-containing exhaust gas containing CO₂ is provided on a side of an upstream flow of the CO₂ absorption tower, the CO₂ recovery method including: setting a temperature of a purified exhaust gas exhausted from the CO₂ absorption tower (T₂) to be lower than a temperature of the CO₂-containing exhaust gas containing CO₂ cooled in the cooling tower (T₁) (T₁ > T₂); and evaporating, in an evaporation portion, a condensed water made by condensing a water vapor discharged from the absorbing liquid regeneration tower.

### Advantageous Effects of Invention

According to the present invention, concentration of amine compounds of an absorbing liquid remaining in and being emitted from a decarbonated exhaust gas can be further reduced, and also recovered absorbing liquid can be concentrated to be reused.

### Brief Description of Drawings

FIG. 1 is a schematic view of a CO₂ recovery apparatus according to a first embodiment.
FIG. 2 is a schematic view of another recovery apparatus according to the first embodiment.
FIG. 3 is a schematic view of another recovery apparatus according to the first embodiment.
FIG. 4 is a schematic view of a CO₂ recovery apparatus according to a second embodiment.

### Description of Embodiments

Hereunder, the present invention will be specifically described referring to the figures. Note that the present invention is not limited by this example, and when there are plural examples, they include what are configured by combining each embodiment. Further, components in the examples below include what a person skilled in the art can easily conceive or what is substantially identical to the same.

### FIRST EMBODIMENT

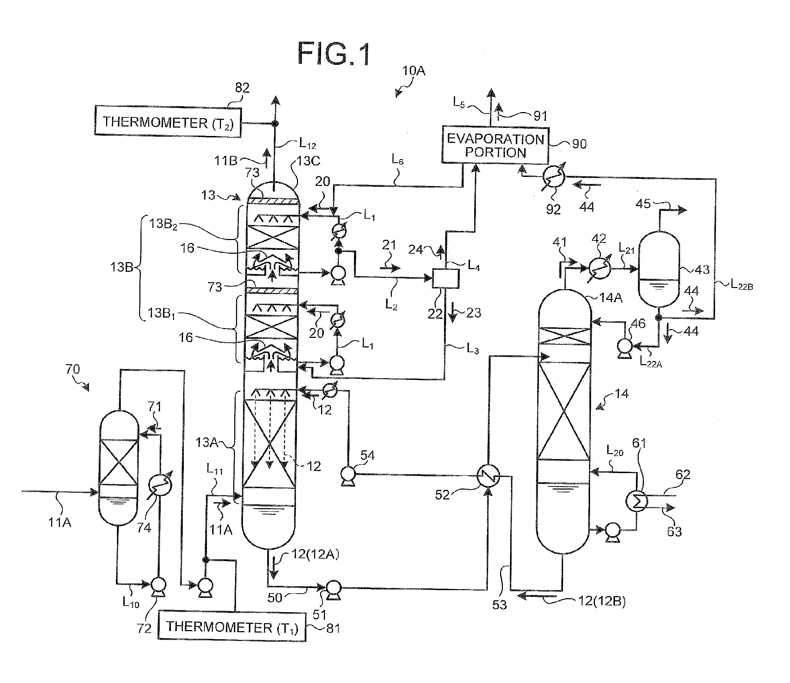

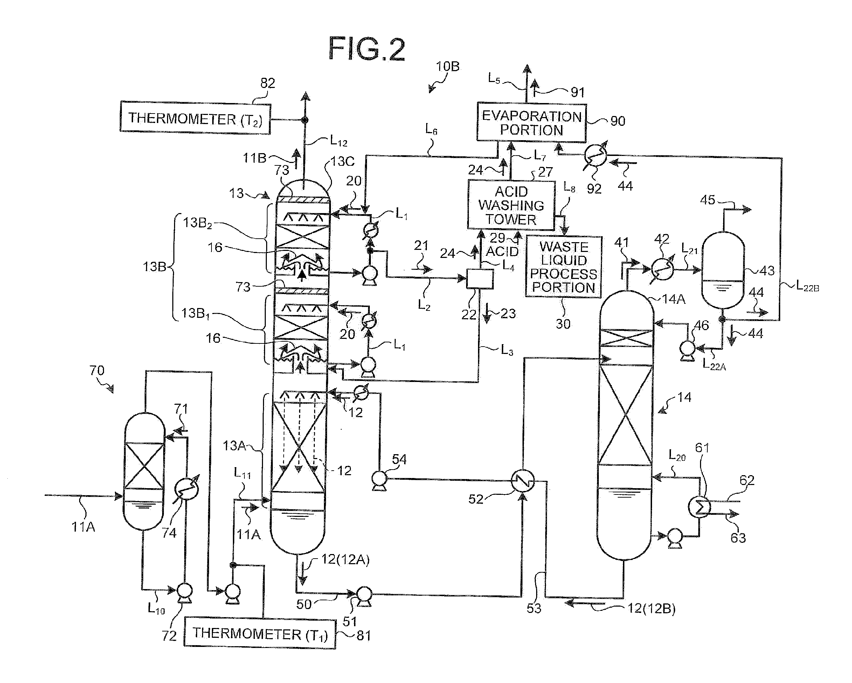

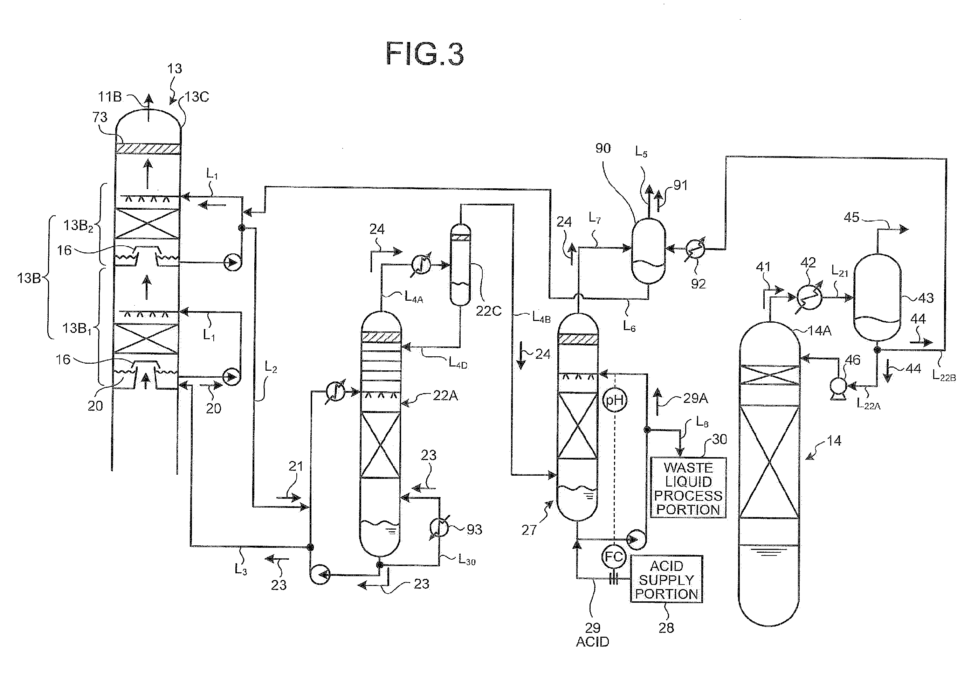

The CO₂ recovery apparatus according to the present invention will be described referring to the figures. FIG. 1 is a schematic view of the CO₂ recovery apparatus according to a first embodiment. FIG. 2 and FIG. 3 are schematic views of another recovery apparatuses according to the first embodiment.

As illustrated in FIG. 1, a CO₂ recovery apparatus 10A according to this example comprises a CO₂ absorption tower (hereunder, also referred to as "absorption tower") 13 where a CO₂-containing exhaust gas 11A which contains CO₂ and a CO₂ absorbing liquid (a lean solution 12B) are contacted with each other so as to remove CO₂, thereby obtaining a purified exhaust gas 11B, an absorbing liquid regeneration tower 14 where a CO₂ absorbing liquid which has absorbed CO₂ (a rich solution 12A) is regenerated, a CO₂ absorption portion 13A which is a CO₂ recovery apparatus reusing the lean solution B from which CO₂ has been removed in the absorbing liquid regeneration tower (hereunder, also referred to as "regeneration tower") 14, and in which the CO₂ absorption tower 13 absorbs CO₂ in the CO₂-containing exhaust gas 11A with a CO₂ absorbing liquid 12 (the lean solution 12B), a water washing portion 13B which is composed of a first water washing portion 13B₁ and a second water washing portion 13B₂ provided on the upper (the downstream flow of the gas flow) side of the CO₂ absorption portion 13A for cooling CO₂-removed exhaust gas as well as recovering the accompanying CO₂ absorbing liquid 12, a washing liquid circulation line L₁ where a washing liquid 20 containing the CO₂ absorbing liquid 12 which has been recovered at the second water washing portion 13B₂ on the tower top portion side is directly circulated from the top side of the water washing portion 13B, an extraction line L₂ where part of the washing liquid 20 containing the CO₂ absorbing liquid 12 is extracted as an extracted liquid 21 from the washing liquid circulation line L₁, a concentration portion 22 where a gas component (water vapor) 24 is separated from the extracted liquid 21 while the CO₂ absorbing liquid is concentrated, a concentrated liquid feed line L₃ where a concentrated liquid 23 which has been concentrated in the concentration portion 22 is fed to the absorbing liquid regeneration tower 14 side, and a gas exhaust line L₄ where the separated gas component (water vapor) 24 is merged into the purified exhaust gas 11B exhausted from the absorption tower 13.

Note that the washing liquid 20 is circulated in the first water washing portion 13B₁ as well in combination with the washing liquid circulation line L₁.

Also note that, although not illustrated, the extracted liquid 21 from the first water washing portion 13B₁ is merged into the CO₂ absorbing liquid 12.

In the CO₂ recovery apparatus 10A of this example, a thermometer 81 and a thermometer 82 are provided to a CO₂-containing exhaust gas supply line L₁₁ where the CO₂-containing exhaust gas 11A is introduced into the CO₂ absorption tower 13 and a purified exhaust gas exhaust line L₁₂ where the purified exhaust gas 11B exhausted from the CO₂ absorption tower 13 is exhausted respectively to measure each gas temperature (T₁, T₂).

Then, as a result of a measurement, a control apparatus, not illustrated, controls a gas temperature of the purified exhaust gas 11B at the outlet of the water washing portion 13B (T₂) so as to set the same lower than a gas temperature at the inlet of the CO₂ absorption tower 13 (T₁) (T₁ > T₂).

As a result, lowering the gas temperature of the purified exhaust gas 11B at the outlet of the CO₂ absorption tower 13 (T₂) than a gas temperature of the CO₂-containing exhaust gas 11A to be introduced (T₁) makes it possible to increase the amount of condensed water, and consequently, amine concentration in liquid in the water washing portion 13B is reduced, amine vapor pressure becomes lower, and the amount of accompanying CO₂ absorbing liquid (amine solution or the like) is reduced, thereby making it possible to reduce emissions thereof to the outside.

Note that, in the absorption tower 13, the CO₂-containing exhaust gas 11A is brought into counterflow contact with the alkanolamine-based CO₂ absorbing liquid 12 in the CO₂ absorption portion 13A provided on the lower side of the CO₂ absorption tower 13, and CO₂ in the CO₂-containing exhaust gas 11A is absorbed by the CO₂ absorbing liquid 12 by a chemical reaction (R-NH₂+H₂O+CO₂→R-NH₃HCO₃).

Then, the CO₂-removed exhaust gas after CO₂ is removed rises to the water washing portion 13B side via a chimney tray 16 and is brought into gas-liquid contact with the washing liquid 20 supplied from the top side of the water washing portion 13B so as to recover the CO₂ absorbing liquid 12 accompanying the CO₂-removed exhaust gas.

After that, the purified exhaust gas 11B from which the CO₂ absorbing liquid 12 has been removed is exhausted outside from a tower top portion 13C of the CO₂ absorption tower 13. Note that a sign 73 indicates a mist eliminator which captures mist in gas.

The rich solution 12A having absorbed CO₂ is boosted by a rich solvent pomp 51 interposed in a rich solution supply tube 50, heated by the lean solution 12B regenerated in the absorbing liquid regeneration tower 14 in a rich/lean solution heat exchanger 52, and supplied to the top side of the absorbing liquid regeneration tower 14.

The rich solution 12A emitted from the top side of the regeneration tower 14 to the inside of the tower emits most of CO₂ by heating by means of water vapor from the tower bottom. The CO₂ absorbing liquid 12 emitting part or most of CO₂ in the regeneration tower 14 is called "semi-lean solution". The semi-lean solution, not illustrated, becomes the lean solution 12B from which almost all CO₂ has been removed when it flows down to the bottom of the regeneration tower 14. The lean solution 12B is heated by saturated water vapor 62 in a regeneration heater 61 interposed in a circulation line L₂₀. The saturated water vapor 62 after heating becomes water-vapor-condensed water 63.

On the other hand, a CO₂ gas 41 accompanied by water vapor dissipated from the rich solution 12A and the semi-lean solution, not illustrated, in the tower is emitted from a tower top portion 14A of the regeneration tower 14.

Then, the CO₂ gas 41 accompanied by water vapor is guided out by a gas exhaust line L₂₁, the water vapor is concentrated by a condenser 42 interposed in the gas exhaust line L₂₁, a condensed water 44 is separated in a separation drum 43, and a CO₂ gas is emitted out of the system and separately subjected to post-processing such as compression recovery.

The condensed water 44 which has been separated in the separation drum 43 is supplied to the upper portion of the absorbing liquid regeneration tower 14 by a condensed water circulation pump 46 interposed in a condensed water line L_{22A}.

Note that, although not illustrated, part of the condensed water 44 is supplied to the top side of the water washing portion 13B as the washing liquid 20 of the CO₂ absorbing liquid 12 and used for absorbing the CO₂ absorbing liquid 12 accompanying the CO₂-removed exhaust gas.

The regenerated CO₂ absorbing liquid (lean solution 12B) is sent to the CO₂ absorption tower 13 side by a lean solution pump 54 via a lean solution supply tube 53, and circulatedly used as the CO₂ absorbing liquid 12.

Accordingly, the CO₂ absorbing liquid 12 forms a closed passage circulating through the CO₂ absorption tower 13 and the absorbing liquid regeneration tower 14, and is reused in the CO₂ absorption portion 13A of the CO₂ absorption tower 13. Note that the CO₂ absorbing liquid 12 is supplied by a replenishment line which is not illustrated as necessary, and a CO₂ absorbing liquid is regenerated by a reclaimer which is not illustrated as necessary.

Additionally, the CO₂-containing exhaust gas 11A supplied to the CO₂ absorption tower 13 is cooled by cooling water 71 in a cooling tower 70 provided to its front stage side, and then introduced into the CO₂ absorption tower 13. Note that a sign 72 indicates a circulation pump, a sign 74 indicates a cooling apparatus, L₁₀ indicates a cooling water circulation line, L₁₁ indicates a CO₂-containing exhaust gas supply line, and L₁₂ indicates a purified exhaust gas exhaust line, respectively.

Thus, the CO₂ absorbing liquid 12 which is circulatedly used through the CO₂ absorption tower 13 and the absorbing liquid regeneration tower 14 brings a CO₂-removed exhaust gas from which CO₂ has been removed and the washing liquid 20 into counterflow contact with each other and the CO₂ absorbing liquid 12 accompanying the CO₂-removed exhaust gas is absorbed and removed by the washing liquid 20 in the water washing portion 13B so as to prevent diffusion to the outside of the absorption tower 13.

In order to reuse the CO₂ absorbing liquid 12 absorbed and removed by the washing liquid 20, in this example, the concentration portion 22 is provided and the CO₂ absorbing liquid 12 is returned to the water washing portion 13B side via a concentrated liquid feed line L₃ which feeds the concentrated liquid 23 which is concentrated in the concentration portion 22 so as to concentrate and use the CO₂ absorbing liquid 12.

In this example, the thermometer 81 and the thermometer 82 are provided to the CO₂-containing exhaust gas supply line L₁₁ and the purified exhaust gas exhaust line L₁₂ respectively to measure each gas temperature (T₁, T₂).

Then, as a result of a measurement, a control apparatus, not illustrated, controls a gas temperature of the purified exhaust gas 11B at the outlet of the water washing portion 13B (T₂) so as to set the same lower than a gas temperature at the outlet of the cooling tower 70 (T₁) (T₁ > T₂).

As a result, lowering the gas temperature of the purified exhaust gas 11B at the outlet of the CO₂ absorption tower 13 (T₂) makes it possible to increase the amount of condensed water, and consequently, amine concentration in liquid in the water washing portion 13B is reduced, amine vapor pressure becomes lower, and the amount of accompanying CO₂ absorbing liquid (amine solution or the like) is reduced, thereby making it possible to reduce emissions thereof to the outside.

When the gas temperature of the purified exhaust gas 11B (T₂) is lowered from 40°C to 35°C here, it is confirmed that amine compound concentration ratio in gas of the purified exhaust gas 11B is decreased to 0.5 at 35°C with respect to 1 at 40°C.

In this manner, the amount of condensed water is increased by lowering the gas temperature at the outlet of the absorption tower 13 (T₂). Therefore, in this example, the condensed water 44 which is condensed in the separation drum 43 separating moisture from the CO₂ gas 41 accompanied by water vapor discharged from the tower top portion 14A in the absorbing liquid regeneration tower 14 is fed to an evaporation portion 90 via a condensed water line L_{22B} so as to evaporate the same as a water vapor 91 here, thereby keeping a water balance in the system of the CO₂ recovery facility. In this manner, the water discharge amount of the CO₂ recovery facility can be reduced by the discharge to the outside of the system as the water vapor 91. L₅ is a discharge line for the water vapor 91. L₆ is a liquid return line for supplying the liquid in the evaporation portion 90 to the washing liquid circulation line L₁.

Note that the condensed water 44 supplied to the evaporation portion 90 is heated by a heat exchanger 92. The CO₂ gas 41 accompanied by water vapor discharged from the top of the regeneration tower 14, the lean solution 12B fed from the regeneration tower 14 to the absorption tower 13 and heat-exchanged in the rich/lean solution heat exchanger 52, or the water-vapor-condensed water 63 condensed by the regeneration heater 61 can be used as a heat source of the heat exchanger so as to heat the condensed water 44 to about 60 to 90 degrees, for example.

Additionally, as the condensed water 44 fed to the evaporation portion 90 is water vapor separated from the tower top portion 14A of the absorbing liquid regeneration tower 14, concentration of its basic component (amine) as an absorbing liquid component is extremely low. Therefore, it can be discharged to the outside of the system as the water vapor 91 as it is.

Further, in this example, part of the washing liquid 20 circulating the second water washing portion 13B₂ on the top side of the water washing portion 13B is extracted and concentrated in the concentration portion 22 to be made to the concentrated liquid 23, and the concentrated liquid 23 is returned to a puddle portion of the first water washing portion 13B₁. Therefore, a volatile component in the washing liquid 20 can be separated from the washing liquid 20, and thereby water washing capability of the water washing portion 13B can be improved.

Furthermore, as a mass balance of water is maintained in the CO₂ absorption tower 13 by returning the concentrated liquid 23 concentrated in the concentration portion 22 to the first water washing portion 13B₁ side, extra moisture does not enter the absorbing liquid regeneration tower 14, and thereby the amount of steam necessary for separating CO₂ can be reduced.

Note that a collapse of water balance due to generation of condensed water is resolved by the concentration of the washing liquid 20 in the concentration portion 22, and also, in the concentration of the washing liquid, the volatile component in the washing liquid can be diffused from the washing liquid to be separated therefrom, and thereby the water washing capability of the water washing portion 13B can be improved.

Note that, for example, an evaporation apparatus, a vapor compression concentration apparatus, or the like can be used in the concentration portion 22. The evaporation apparatus in which the washing liquid 20 is heated to be evaporated while being stored in an evaporator, the concentrated liquid 23 is supplied to the next evaporator, and also the water vapor 24 is used as a heating source in the next evaporator, and the evaporators are provided plurally can be exemplified.

Also, the vapor compressing concentration apparatus pressurizes the water vapor 24 generated in the evaporator with a compressor so as to raise the temperature, thereby using the same as a heat source for heating, and can reduce power consumption upon concentration.

### SECOND EMBODIMENT

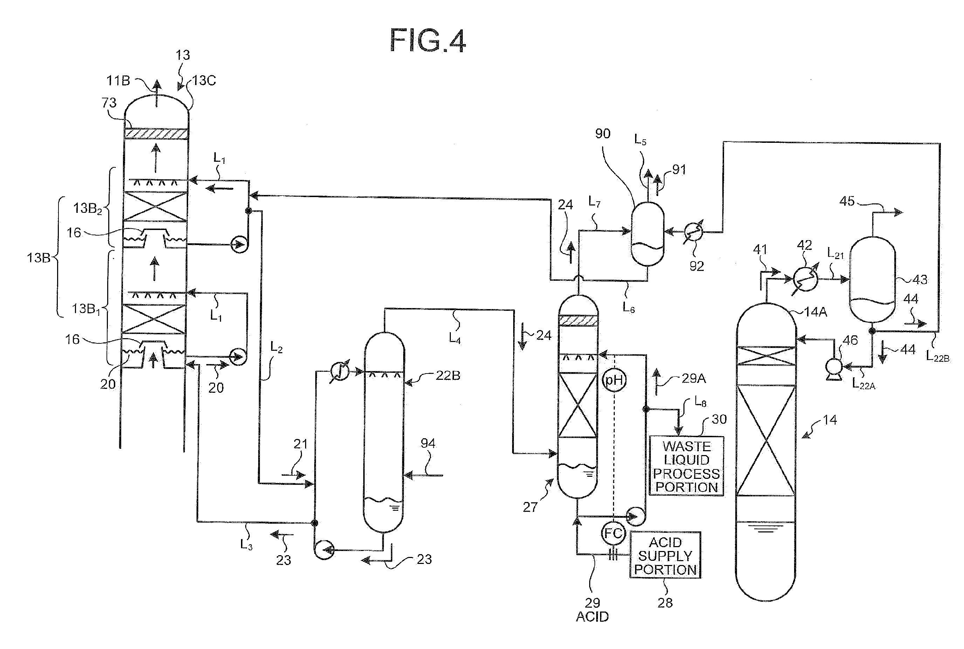

FIG. 2 is a schematic view of a CO₂ recovery apparatus according to a second embodiment. FIG. 3 and FIG. 4 are schematic views of other CO₂ recovery apparatuses according to the second embodiment. Note that, configurations identical to the CO₂ recovery apparatus 10A according to the first embodiment illustrated in FIG. 1 are followed by the identical signs to omit overlapping descriptions.

As illustrated in FIG. 2, in a CO₂ recovery apparatus 10B of this example, an acid washing tower 27 is provided as a volatile component recovery portion in which the volatile component contained in the gas component 24 separated in the concentration portion 22 is treated with acid and recovered so as to recover and remove the volatile component in the gas component 24 separated from the concentration portion 22.

An acid 29 is added to the acid washing tower 27 from an acid supply portion (not illustrated) and recovered in an acid treatment liquid as a sulfate, then treated in a waste liquid process portion 30 via a supply line L₈.

Although sulphuric acid, for example, can be used as the acid 29 charged here, the present invention is not limited to the same.

Note that, as the acid 29, hydrochloric acid, phosphoric acid, boric acid, carbonic acid, oxalic acid, or the like other than sulfuric acid can be given.

Although any will do as the concentration portion 22 so long as it heats part of extracted water of the washing liquid 20, a concentration tower 22A as illustrated in FIG. 3 and a concentration tower 22B as illustrated in FIG. 4 can be exemplified.

FIG. 3 illustrates a CO₂ recovery apparatus comprising the concentration tower 22A in which the washing liquid is concentrated by heating the concentrated liquid 23, and FIG. 4 illustrates a CO₂ recovery apparatus comprising the concentration tower 22B in which the washing liquid is concentrated by introducing a heated air 94 from the outside.

In the concentration tower 22A illustrated in FIG. 3, a heat exchanger 93 is interposed in a circulation line L₃₀ circulating the concentrated liquid 23 so as to heat the concentrated liquid 23. The CO₂ gas 41 accompanied by water vapor discharged from the top of the regeneration tower 14, the lean solution 12B fed from the regeneration tower 14 to the absorption tower 13 and heat-exchanged in the rich/lean solution heat exchanger 52, or the water-vapor-condensed water 63 condensed by the regeneration heater 61 can be used as a heating source of the heat exchanger 93 so as to heat the concentrated liquid 23 to about 60 to 90 degrees, for example.

Additionally, in this example, a separation drum 22C is provided to a supply line L_{4A} to which the gas component 24 is guided out from the top of the concentration tower 22A so as to separate moisture and an absorbing liquid from the gas component 24, thereby preventing accompaniment of the moisture and absorbing liquid to the outside and also preventing dissipation of the moisture and absorbing liquid to the outside of the system. The gas component 24 separated in the separation drum 22C is supplied to the acid washing tower 27 via a supply line L_{4B}, and treated with acid here. Note that liquid separated in the separation drum 22C is returned to the concentration tower 22A via a supply line L_{4D}.

In the concentration tower 22B illustrated in FIG. 4, the heated air 94 is blown into the inside thereof and the heated air 94 is accompanied by a volatile component so as to be exhausted to the outside.

A washing liquid containing an absorbing liquid which does not accompany the air 94 is supplied to the first water washing portion 13B₁ as the concentrated liquid 23. In order to facilitate accompaniment of the volatile component, the air 94 may be heated by a heat exchanger, not illustrated.

The air containing the volatile component is sent to the acid washing tower 27 and washed with acid so as to remove the volatile component therefrom, and then sent to the evaporation portion 90. Note that the gas component 24 may be supplied to the concentration tower 22B so as to be used as the air 94 which generates water vapor.

As described above, according to the present invention, concentration of amine compounds remaining in and being emitted from a decarbonated exhaust gas can be further reduced, and also a concentrated absorbing liquid can be effectively reused.

### Reference Signs List

- 10A, 10B CO₂: RECOVERY APPARATUS
- 11A: CO₂-CONTAINING EXHAUST GAS
- 12: CO₂ ABSORBING LIQUID
- 12A: RICH SOLUTION
- 12B: LEAN SOLUTION
- 13: CO₂ ABSORPTION TOWER (ABSORPTION TOWER)
- 14: ABSORBING LIQUID REGENERATION TOWER (REGENERATION TOWER)
- 20: WASHING LIQUID
- 21: EXTRACTED LIQUID
- 22: CONCENTRATION PORTION
- 23: CONCENTRATED LIQUID
- 24: GAS COMPONENT
- 90: EVAPORATION PORTION

## Claims

1. A CO₂ recovery apparatus comprising:
a CO₂ absorption tower for bringing a CO₂-containing exhaust gas containing CO₂ and a CO₂ absorbing liquid into contact with each other so as to remove CO₂ and make a purified exhaust gas; and
an absorbing liquid regeneration tower for separating CO₂ from the CO₂ absorbing liquid which has absorbed CO₂ so as to regenerate the CO₂ absorbing liquid,
wherein a lean solution from which CO₂ has been removed in the absorbing liquid regeneration tower is reused in the CO₂ absorption tower,
wherein a cooling tower for cooling the CO₂-containing exhaust gas containing CO₂ is provided on a side of an upstream flow of the CO₂ absorption tower and a temperature (T₂) of the purified exhaust gas exhausted from the CO₂ absorption tower is set to be lower than a temperature (T₁) of the CO₂-containing exhaust gas containing CO₂ cooled in the cooling tower (T₁ > T₂), and
wherein an evaporation portion is configured to evaporate a condensed water made by condensing water vapor discharged from the absorbing liquid regeneration tower.

2. The CO₂ recovery apparatus according to claim 1,
wherein the CO₂ absorption tower comprises:
a CO₂ absorption portion for absorbing CO₂ in the CO₂-containing exhaust gas by the CO₂ absorbing liquid,
a water washing portion for cooling a CO₂-removed exhaust gas by the washing liquid and for recovering the CO₂ absorbing liquid which accompanies the same, the water washing portion being provided on a side of a downstream flow of a gas flow of the CO₂ absorption portion;
a washing liquid circulation line for supplying the washing liquid containing the CO₂ absorbing liquid recovered in the water washing portion from a side of a top of the water washing portion so as to circulate and wash the washing liquid;
an extraction line for extracting a part of the washing liquid containing the CO₂ absorbing liquid as an extracted liquid from the washing liquid circulation line; and
a concentration portion for concentrating the CO₂ absorbing liquid while separating a gas component from the extracted liquid.

3. The CO₂ recovery apparatus according to claim 2, wherein the concentration portion comprises:
a concentration tower for heating an extracted water;
a concentrated liquid return line for returning a concentrated liquid separated from the concentration tower to the CO₂ absorption tower; and
an acid washing tower for treating a volatile component contained in a gas component separated in the concentration tower with an acid and recovering the volatile component.

4. A CO₂ recovery method for using a CO₂ absorption tower for removing CO₂ by bringing a CO₂-containing exhaust gas containing CO₂ and a CO₂ absorbing liquid into contact with each other so as to remove CO₂ and an absorbing liquid regeneration tower for regenerating the CO₂ absorbing liquid by separating CO₂ from the CO₂ absorbing liquid absorbing CO₂ so as to reuse a lean solution from which CO₂ has been removed in the absorbing liquid regeneration tower in the CO₂ absorption tower,
wherein a cooling tower for cooling the CO₂-containing exhaust gas containing CO₂ is provided on a side of an upstream flow of the CO₂ absorption tower,
the CO₂ recovery method comprising:
setting a temperature of a purified exhaust gas exhausted from the CO₂ absorption tower (T₂) to be lower than a temperature of the CO₂-containing exhaust gas containing CO₂ cooled in the cooling tower (T₁) (T₁ > T₂) ; and
evaporating, in an evaporation portion, a condensed water made by condensing a water vapor discharged from the absorbing liquid regeneration tower.
